(19) Europäisches Patentamt
European Patent Office
Office européen des brevets

(11) **EP 2 854 273 A1**

(12) **EUROPEAN PATENT APPLICATION**
published in accordance with Art. 153(4) EPC

(43) Date of publication:
01.04.2015 Bulletin 2015/14

(51) Int Cl.:
*H02M 3/155* (2006.01)    *H02M 3/158* (2006.01)
*H02M 7/5387* (2007.01)

(21) Application number: 13794292.6

(22) Date of filing: 15.04.2013

(86) International application number:
PCT/JP2013/061692

(87) International publication number:
WO 2013/175915 (28.11.2013 Gazette 2013/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 22.05.2012 JP 2012116202

(71) Applicant: Toyo System Co., Ltd.
Iwaki-shi, Fukushima 972-8316 (JP)

(72) Inventors:
• SHOJI Hideki
Iwaki-shi
Fukushima 972-8316 (JP)

• KAWABERI Seiji
Iwaki-shi
Fukushima 972-8316 (JP)
• NAKAJIMA Shigeki
Iwaki-shi
Fukushima 972-8316 (JP)

(74) Representative: Turner, Stephen
Cleveland
10 Fetter Lane
London EC4A 1BR (GB)

(54) **FULL-BRIDGE POWER CONVERTER**

(57) A full-bridge power converter is provided wherein a full-bridge circuit is operated so as to minimize ripple current.

A switch control unit 20 generates control signals for individual switching elements to control the ON/OFF operation of switching elements of a full-bridge circuit 10, thereby turning a switching element (Q1) 11 and a switching element (Q2) 12 ON and OFF alternately and turning a switching element (Q3) 13 and a switching element (Q4) 14 ON and OFF alternately to output from the full-bridge circuit 10 supply current for supplying to a load 21, and turning ON both the switching element (Q1) 11 and the switching element (Q3) 13 during a period when the supply current is not output, thereby connecting and passing inertial current between the connection points 3 of the full-bridge circuit 10.

FIG.3(b)

EP 2 854 273 A1

# Description

Technical field

This invention relates to a full-bridge power converter for converting and outputting DC power using a full-bridge circuit.

Background Art

A power converter using a full-bridge circuit that comprises four switching elements is described in Japanese Patent No. 2664163, for example.

Although the aforesaid converter produces a pulse output corresponding to sine wave AC power, it is equipped on the output side of the full-bridge circuit with a rectifier and so on and has connected/inserted smoothing capacitors in order to smooth the output power when outputting DC power.

With this type of power converter, the output current includes a considerable ripple component when the power switched in the full-bridge circuit is large or the load connected to the output terminals is heavy. The aforesaid smoothing capacitors are provided for removing such ripple current, and the smoothing capacitors require tolerance for passing the ripple current, while a converter with high power output must be equipped with smoothing capacitors that are thoroughly dependable even under flow of high ripple current and against aging.

In a full-bridge circuit using four switching elements, the ON/OFF operation of one pair of diagonally opposite switching elements is synchronized and another pair of switching elements is operated with the ON/OFF operation inverted from that of the aforesaid pair. By performing such switching operation, high potential and low potential voltages are alternately applied between two output terminals, i.e., voltage that varies pulse-like over time is applied and current is applied to a load connected to the output terminals. The value of the power or current supplied to the load is controlled by the pulse width of the applied voltage, namely by the ON-duty.

Here, defining the ON-duty as D, the switching cycle period of time as T, and the value of the input voltage as Vp, the output voltage Eo becomes Eo = (2D - 1)Vp.

Further, defining the smoothing inductor connected to the output side of the full-bridge circuit as L and the output instantaneous voltage of the full-bridge circuit as Vb(t), the output current Io becomes Io = 1/L ∫(Vb(t) - Eo) dt.

Prior art reference

Patent reference

Patent reference 1: Japanese patent no. 2664163

Summary of the invention

Problem to be solved by the invention

A power converter utilizing a conventional full-bridge circuit is configured in the foregoing manner and needs to be equipped with smoothing capacitors having considerable ripple tolerance for absorbing the ripple component produced in the input/output current by the switching operation.

The number of parallel-connected capacitors needs to be increased particularly on the input side owing to the occurrence of very large ripple current having the same effective value as the DC output current, so that there has been a problem of large converter size and also high cost.

This invention was made to solve the aforesaid problems and has as its object to provide a full-bridge power converter that operates a full-bridge circuit so as to suppress ripple current.

Means for solving the problems

The full-bridge power converter according to this invention comprises a full-bridge circuit constituted by series-connecting one end of a first switching element and one end of a second switching element, series-connecting one end of a third switching element and one end of a fourth switching element, and parallel-connecting the series-connected first and second switching elements and the series-connected third and fourth switching elements, a switch control unit for individually controlling ON/OFF operation of the first switching element to the fourth switching element, an input capacitor connected between a first connection point between another end of the first switching element and another end of the third switching element and a second connection point between another end of the second switching element and another end of the fourth switching element, a first inductor connected at one end to a third connection point between the one end of the first switching element and the one end of the second switching element, and an output capacitor connected at one end to another end of the first inductor and connected at another end to a fourth connection point between the one end of the third switching element and the one end of the fourth switching element, and wherein, when a DC voltage is input between the first connection point and the second connection point and a load is connected to opposite ends of the output capacitor, the switch control unit generates control signals for the individual switching elements for controlling ON/OFF operation of the switching elements, turns the first switching element and the second switching element ON and OFF alternately and turns the third switching element and the fourth switching element ON and OFF alternately to output from the full-bridge circuit supply current for supplying to the load, turns ON both the first switching element and the third switching element during a period when the supply current is not output to connect and pass inertial current between the third connection point and the fourth connection point, and where whichever of the ON-state time durations of the first switching element and the third switching element is shorter is defined as time duration Tm, an overlap period wherein an ON/OFF-state of a switching element whose ON-state time duration is longer and an ON/OFF-state of a switching element whose ON-state time duration is shorter are the same is defined as Td, and a drive overlap ratio indicating a ratio of the overlap period Td to the time duration Tm is defined as Rd = (Td / Tm) x 100%, controls operation of the switching elements to make the drive overlap ratio Rd not less than 50% and not greater than 100%.

Further, as a method for increasing the drive overlap ratio, the switch control unit defines switching operation transition timing with reference to center time points of ON-state periods and center time points of OFF-state periods of the switching elements. Moreover, control is performed for synchronizing transition to ON-state and synchronizing transition to OFF-state.

Further, a second inductor is additionally installed in series connection between the fourth connection point and the other end of the output capacitor.

Effect of the invention

By operating the full-bridge circuit so as to suppress ripple current, this invention makes it possible to reduce the number of smoothing capacitors used, thereby enabling size and cost reduction. Moreover, output accuracy and stability can be improved by the reduction of output ripple.

Brief description of the drawings

Figure 1 is a circuit diagram schematically illustrating the configuration of a full-bridge power converter according to a first embodiment of this invention.
Figures 2(a), (b) and (c) are explanatory diagrams showing ordinary operation of switching elements.
Figures 3(a), (b) and (c) are explanatory diagrams showing the operation of the switching elements of the full-bridge power converter according to the first embodiment.
Figures 4(a), (b) and (c) are explanatory diagrams showing operational control of the full-bridge power converter according to the first embodiment.
Figures 5(a) and (b) are explanatory diagrams showing inertial current flowing in the full-bridge power converter according to the first embodiment.
Figures 6(a) and (b) are explanatory diagrams showing operation of the full-bridge power converter according to the first embodiment.
Figures 7(a) and (b) are explanatory diagrams showing input voltages and output currents of a full-bridge circuit.
Figures 8(a) and (b) are explanatory diagrams showing operational control of a full-bridge power converter according to a second embodiment.

Modes for carrying out the invention

In the following, embodiments of this invention are explained based on the drawings.

First embodiment

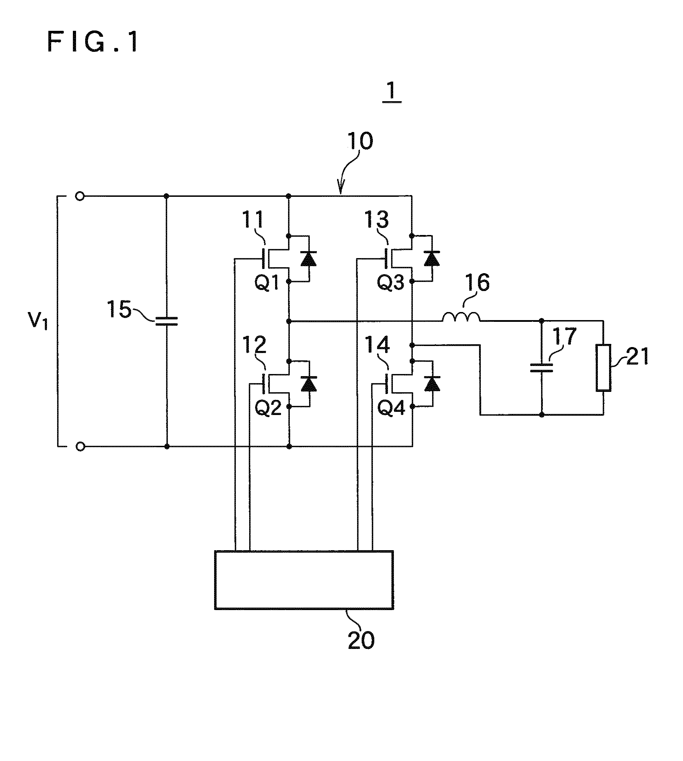

Figure 1 is a circuit diagram schematically illustrating the configuration of a full-bridge power converter according to a first embodiment of this invention. The illustrated full-bridge power converter 1 is equipped with a full-bridge circuit 10 comprising four switching elements (Q1) 11 ~ (Q4) 14.

The switching elements (Q1) 11 ~ (Q4) 14 are, for example, MOSFET or other semiconductor devices and power MOSFETs are used particularly in the case of outputting high power.

When using n-channel MOSFETs as the switching elements (Q1) 11 ~ (Q4) 14, the drains of the switching element (Q1) 11 and switching element (Q3) 13 are connected together, and the source of the switching element (Q1) 11 and the drain of the switching element (Q2) 12 are connected together. Further, the source of the switching element (Q3) 13 is connected to the drain of the switching element (Q4) 14, and the sources of the switching element (Q2) 12 and switching element (Q4) 14 are connected together. Moreover, the gates of the switching elements 11 ~ 14 are connected to a switch control unit 20, thereby configuring the full-bridge circuit 10.

The switching elements (Q1) 11 ~ (Q4) 14 have parasitic diodes between their drains and sources, i.e., between the contacts, and in the case where the recovery property and the like of the parasitic diodes is inadequate when the inertial current mentioned later passes, suitably rated diodes are connected between the contacts of the switching elements.

Although the full-bridge circuit 10 using MOSFETs as switching elements is explained here as an example, bipolar transistors, IGBTs, or the like can be used as the switching elements insofar as they satisfy the current-carrying capacity for flowing in the full-bridge circuit 10, the breakdown-voltage characteristics, the switching speed, and the like.

An input voltage V1 is applied between a connection point between the switching element (Q1) 11 and switching element (Q3) 13 and a connection point between the switching element (Q2) 12 and switching element (Q4) 14; these connection points constitute the input points of the full-bridge circuit 10. These input points are connected to input terminals of the full-bridge power converter 1.

An input capacitor 15 for smoothing input current is connected between the two input points of the full-bridge circuit 10.

The connection point between the switching element (Q1) 11 and switching element (Q2) 12, and the connection point between the switching element (Q3) 13 and switching element (Q4) 14, are the output points of the full-bridge circuit 10.

In the full-bridge circuit 10 exemplified in Figure 1, one end of an inductor 16 is connected to one of the two output points, e.g., to the connection point between the switching element (Q1) 11 and switching element (Q2) 12. Further, one end of an output capacitor 17 is connected to the connection point between the switching element (Q3) 13 and switching element (Q4) 14, and the other end of the output capacitor 17 is connected to the other end of the inductor 16.

The opposite ends of the output capacitor 17 are connected to the output terminals of the full-bridge power converter 1, and a load 21 is connected to these output terminals.

Although the inductor 16 is here inserted in series (series connected) in only one of the two output lines between output points of the full-bridge circuit 10 and the load 21, it is also possible to insert inductors in series in the output lines on both sides. When two inductors are installed in this way, a second inductor (not shown), aside from the inductor 16, is connected at one end to the connection point between the switching element (Q3) 13 and switching element (Q4) 14, and the other end of the second inductor is connected to the one end of the output capacitor 17. Further, in this instance, the load 21 is connected between the connection point between the inductor 16 and output capacitor 17 and the connection point between the second inductor and output capacitor 17. In other words, the load 21 is connected to the opposite ends of the output capacitor 17.

The switch control unit 20, which controls the gate voltages of the switching elements 11 ∼ 14, comprises, inter alia, a processor and a memory for storing a control program and the like. Moreover, with consideration to the type of the load 21, the purpose of the power supply and other factors, it is possible to configure the switch control unit 20 so that the operation of the switching elements 11 ∼ 14 can be specified from the outside.

The load 21 is, for example, a secondary cell that can be charged repeatedly, specifically a battery cell, battery module, battery pack or the like for an automobile, ESS (energy storage system) or similar.

Moreover, a DC bus or the like of another device can be connected to the full-bridge power converter 1 as the load 21.

The operation will be explained next.

A DC voltage V1 is applied across the two input points of the full-bridge circuit 10 from the outside.

When the full-bridge power converter 1 supplies power to the load 21, the switch control unit 20, under the condition of the DC voltage V1 being supplied, controls the switching operation of the switching elements (Q1) 11 ∼ (Q4) 14 as described below to output DC current from the output points of the full-bridge circuit 10.

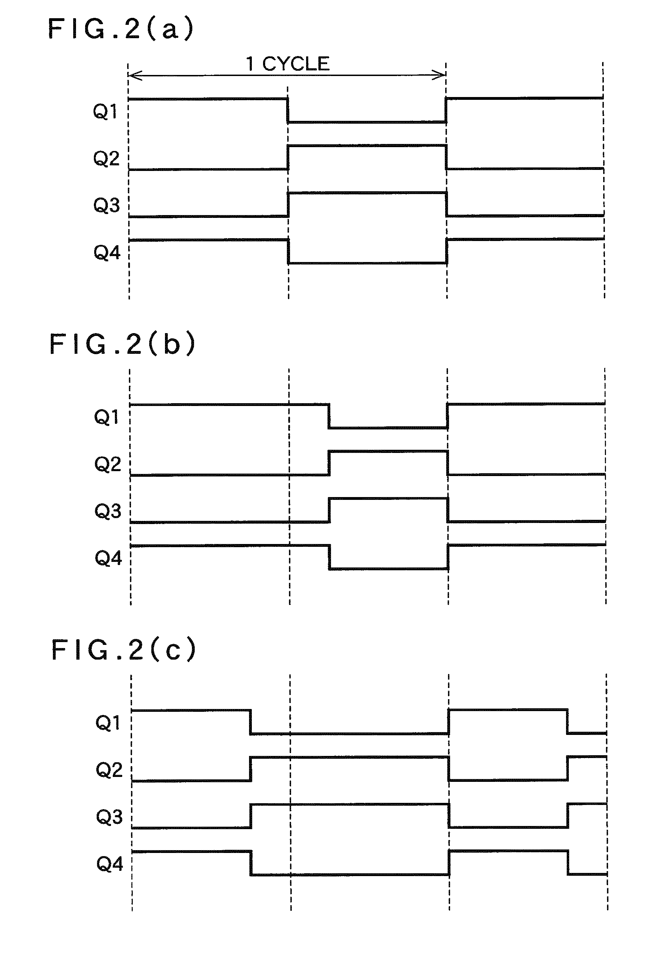

Figure 2 is a set of explanatory diagrams showing ordinary switching element operation. This drawing, which shows an example of ordinary full-bridge circuit operation, is a set of timing charts indicating the operation timing of the four switching elements comprising the full-bridge circuit. In the drawing, the periods exhibiting high level represent ON-states and the periods exhibiting low level represent OFF-states.

The ON/OFF operation illustrated here represents the operations of the switching element Q1 corresponding to the switching element 11 (see Figure 1), the switching element Q2 corresponding to the switching element 12, the switching element Q3 corresponding to the switching element 13, and the switching element Q4 corresponding to the switching element 14.

Figure 2(a) shows the ON/OFF operation of the switching elements Q2 ∼ Q4 in the case where the ON-duty of the switching element Q1 is controlled to 50%. With this switching operation, the ON-duties and OFF-duties of the switching elements Q1 ∼ Q4 are all 50%.

Figure 2(b) shows the ON/OFF operation of the switching elements Q2 ∼ Q4 in the case where the ON-duty of the switching element Q1 is controlled to greater than 50%. Figure 2(c) shows the ON/OFF operation of the switching elements Q2 ∼ Q4 in the case where the ON-duty of the switching element Q1 is controlled to less than 50%.

Here, the voltage on the high potential side is applied to the connection point between the switching element (Q1) and switching element (Q3) (first input point), and the voltage on the low potential side is applied to the connection point between the switching element (Q2) and switching element (Q4) (second input point).

In the case where, for example, a battery cell is connected between the output points of the full-bridge circuit 10 as the load 21 and switching between battery cell charge and discharge is performed at desired time points (timing), the switching operation of the full-bridge circuit 10 is suitably controlled to reverse the high/low potential relationship occurring between the output points so as to produce a state of passing charge current from the full-bridge circuit 10 to the battery cell and a state of passing discharge current from the battery cell to the full-bridge circuit 10.

Further, depending on the function or type of the load connected to the full-bridge circuit 10, a rectifying circuit is sometimes connected to the output points of the full-bridge circuit 10 to prevent reverse current flow.

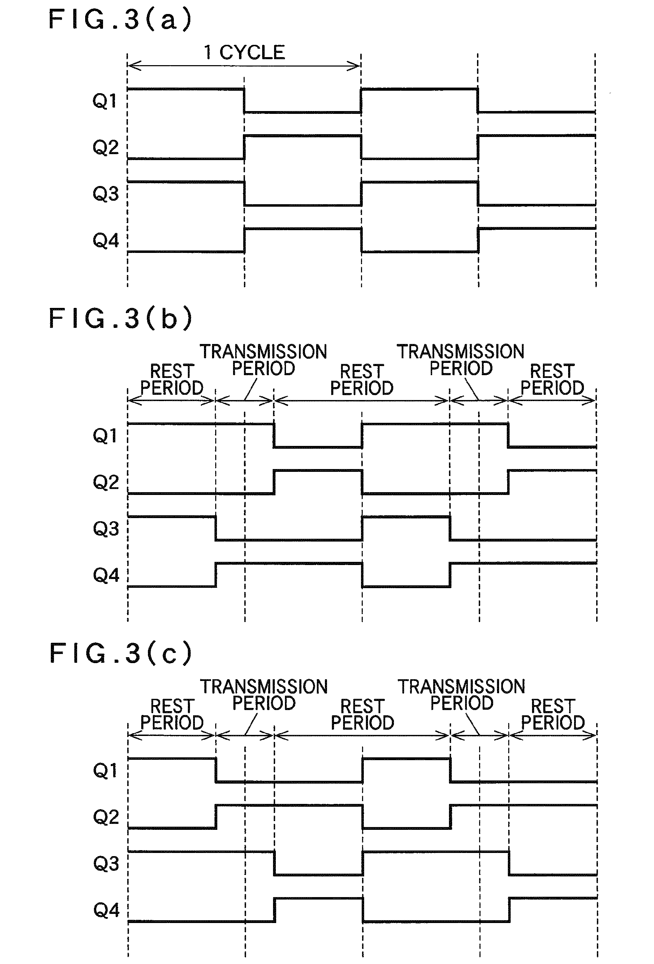

Figure 3 is a set of explanatory diagrams showing the operation of the switching elements of the full-bridge power converter according to the first embodiment. This drawing, which shows an example of operation of the full-bridge circuit 10 of Figure 1, is a set of timing charts indicating the operation timing of the switching element (Q1) 11, switching element (Q2) 12, switching element (Q3) 13, and switching element (Q4) 14. In the drawing, the periods exhibiting high level represent ON-states and the periods exhibiting low level represent OFF-states.

Figure 3(a) shows the case where the ON-duties of the switching elements 11 ~ 14 is made 50%.

Figure 3(b) shows the operation of the switching elements in the case where the ON-duty of the switching element (Q1) 11 is made greater than 50%. Specifically, the operation is indicated in the case where the ON-duties of both the switching element (Q1) 11 and the switching element (Q4) 14 are made greater than 50% and the ON-duties of the switching element (Q2) 12 and switching element (Q3) 13 are made less than 50%.

Further, Figure 3(c) shows the operation of the switching elements in the case where the ON-duty of the switching element (Q1) 11 is made less than 50%. Specifically, the operation is indicated in the case where the ON-duties of both the switching element (Q1) 11 and the switching element (Q4) 14 are made less than 50% and the ON-duties of the switching element (Q2) 12 and switching element (Q3) 13 are made greater than 50%.

When the full-bridge circuit 10 is operated, dead times are established in the switching operation so as to prevent flow-through current from passing between the first input point and the second input point. In Figure 3(a), for example, a dead time is a delay time added after transitioning the switching element (Q2) 12 to OFF-state for transitioning the switching element (Q1) 11 to ON-state and is established for preventing two series-connected switching elements from both assuming ON-state by reason of the switching speeds of the switching elements. Although dead times are also established in the switching operation of the full-bridge circuit 10 in the present embodiment, they are very short times when represented in the switching operation characterizing the present invention and are therefore not indicated in aforesaid Figures 2 and 3 or in the drawings referred to in the explanation hereinafter. Moreover, no attention is focused on dead time in this explanation of the operation.

In the switching operation indicated in Figures 3(a), (b) and (c), a period is established during which the switching element (Q1) 11 and switching element (Q3) 13 to which high potential side input voltage is applied both assume ON-state. Further, a period is established during which the switching element (Q2) 12 and switching element (Q4) 14 to which low potential side input voltage is applied both assume ON-state.

No period exists during which the switching element (Q1) 11 and switching element (Q2) 12 both assume ON-state or during which both the switching element (Q3) 13 and switching element (Q4) 14 both assume ON-state. Moreover, depending on the purpose or the like of supplying power to the load 21, cases arise in which only the switching operation shown in Figure 3(b) is performed, in which only the switching operation shown in Figure 3(c) is performed, and in which the switching operations of Figures 3(b) and 3(c) are performed in combination.

As shown in Figure 3(a), when the ON-duty is made 50% and the transition timing of all statuses (transition from ON to OFF and transition from OFF to ON of all switching elements) is synchronized, the potential difference between the two output points of the full-bridge circuit 10 disappears and the full-bridge circuit 10 outputs no power even if current flows. During this time, inertial current owing to the discharge of energy $W = 1/2 \cdot LI^2$ stored in advance in the inductor 15 or current attributable to a battery or the like (load 21) flow.

In order for the full-bridge circuit 10 to transfer energy from the input V1 to the output, the switching elements are operated, as shown in Figure 3(b) or Figure 3(c), for example, so that neither ON-to-OFF transition timing, nor OFF-to-ON transition timing, nor all transition timing is synchronized between switching elements (Q1) 11, (Q2) 12 and switching elements (Q3) 13, (Q4) 14.

In the switching operation shown in Figure 3(b), the ON/OFF-state of the series-connected switching element (Q1) 11 and switching element (Q2) 12 is reversed and the switching timing synchronized, while the ON/OFF-state of the series-connected switching element (Q3) 13 and switching element (Q4) 14 is reversed and the switching timing is synchronized.

Moreover, in this switching operation, the timing of the transitions from OFF-state to ON-state of the switching element (Q1) 11 and switching element (Q3) 13 is synchronized, and the timing of the transitions from ON-state to OFF-state of the switching element (Q2) 12 and switching element (Q4) 14 is synchronized.

Further, in this switching operation, the timing of the transition to OFF-state of the switching element (Q1) 11 and the timing of the transition to ON-state of the switching element (Q2) 12 are synchronized. Moreover, the timing of the transition to OFF-state of the switching element (Q3) 13 and the timing of the transition to ON-state of the switching element (Q4) 14 are synchronized. Here, the timing of the transition to OFF-state of the switching element (Q1) 11 and the timing of the transition to OFF-state of the switching element (Q3) 13, for example, are not synchronized. Note that this switching operation is for the case of outputting positive voltage.

In the foregoing case of outputting positive voltage, the switch control unit 20 makes the ON-duty of the switching element (Q1) 11 greater than the ON-duty of the switching element (Q3), and, to the contrary, makes it smaller in the case of outputting negative voltage discussed later.

As indicated, for example, by "Transmission period" in Figure 3(b), controlling the operation of the switching elements in the foregoing manner puts both the switching element (Q1) 11 and the switching element (Q4) 14 in ON-state and, in addition, establishes a period when both the switching element (Q2) 12 and the switching element (Q3) 13 are in OFF-state.

For example, where n-channel MOSFETs are used for the switching elements, if the high potential side of voltage V1 indicated in Figure 1 is applied to the connection point between the switching element (Q1) 11 and switching element (Q3) 13 (first input point) and the low potential side of the voltage V1 is applied to the connection point between the switching element (Q2) 12 and switching element (Q4) 14 (second input point), then, as indicated by "Transmission period" in Figure 3(b), when the switching elements are switching ON and OFF, current passes from the drain side of the switching element (Q1) 11 to the connection point between the switching element (Q1) 11 and switching element (Q2) 12 (first output point of the full-bridge circuit 10) and supply current flows to the load 21 through the inductor 16. Further, current returning from the load 21 flows into the connection point between the switching element (Q3) 13 and switching element (Q4) 14 (second output point of the full-bridge circuit 10) and further flows to the source side of the switching element (Q4) 14.

In the switching operation shown in Figure 3(c), similarly to that shown in Figure 3(b), the ON/OFF-state of the series-connected switching element (Q1) 11 and switching element (Q2) 12 is reversed and the switching timing is synchronized, while the ON/OFF-state of the series-connected switching element (Q3) 13 and switching element (Q4) 14 is reversed and the switching timing is synchronized.

Moreover, the timing of the transitions from OFF-state to ON-state of the switching element (Q1) 11 and switching element (Q3) 13 is synchronized, and the timing of the transitions from ON-state to OFF-state of the switching element (Q2) 12 and switching element (Q4) 14 is synchronized.

Further, in this switching operation, the timing of the transition to OFF-state of the switching element (Q1) 11 and the timing of the transition to ON-state of the switching element (Q2) 12 are synchronized. Moreover, the timing of the transition to OFF-state of the switching element (Q3) 13 and the timing of the transition to ON-state of the switching element (Q4) 14 are synchronized. Here, the timing of the transition to OFF-state of the switching element (Q1) 11 and the timing of the transition to OFF-state of the switching element (Q3) 13, for example, are not synchronized.

When the switch control unit 20 controls the switching operation of the switching element in the foregoing manner, it makes the ON-duty of the switching element (Q3) 13 greater than the ON-duty of the switching element (Q1) 11. The output voltage is negative voltage at this time.

Moreover, as indicated, for example, by "Transmission period" in Figure 3(c), controlling the operation of the switching elements in the foregoing manner puts both the switching element (Q1) 11 and the switching element (Q4) 14 in OFF-state and, in addition, establishes a period when both the switching element (Q2) 12 and the switching element (Q3) 13 are in ON-state.

When, as in the foregoing, the high potential side of voltage V1 is applied to the connection point between the switching element (Q1) 11 and switching element (Q3) 13 and the low potential side of the voltage is applied to the connection point between the switching element (Q2) 12 and switching element (Q4) 14, then, as indicated by "Transmission period" in Figure 3(c), when the switching elements are switching ON and OFF, current passes from the drain side of the switching element (Q3) 13 to the connection point between the switching element (Q3) 13 and switching element (Q4) 14 (the second output point of the full-bridge circuit 10) and supply current flows to the load 21 from this connection point. Further, current returning from the load 21 flows through the inductor 16 into the connection point between the switching element (Q1) 11 and switching element (Q2) 12 (the first output point of the full-bridge circuit 10) and further flows to the source side of the switching element (Q2) 12.

As explained above, the full-bridge power converter 1 uses the input voltage V1 to output current from the output points of the full-bridge circuit 10 during the "Transmission period" indicated in Figure 3(b) or Figure 3(c). The current output from output points of this full-bridge circuit 10 is DC current owing to the choking effect of the inductor 16 and is additionally smoothed by the output capacitor 17 to be output to the load 21.

When the full-bridge circuit 10 is configured using power MOSFETs, for example, a battery cell or the like is connected to the full-bridge power converter 1 as the load 21. When a discrete battery cell is connected and charge-discharge testing or the like is performed, a current of 10 [A] ~ 360 [A] is output to the load 21 at a voltage of 5 [V] across the output points during the "Transmission period."

Further, when a battery module was connected as the load 21, a maximum current of 500 [A] was output at a voltage across the output points of 60 [V].

Moreover, when a battery pack was connected as the load 21, a maximum current of 500 [A] was output at a voltage across the output points of 500 [V].

In the case where a full-bridge circuit is operated in the conventional manner (e.g., in the case of operating it as shown in Figure 2), the effective value Irms of the ripple current flowing into the input capacitor is the same as the output current. For example, at an output current of 500 [A], the effective value Irms of the ripple current is 500 [A]. In contrast, in the case of operation in the manner of the full-bridge circuit 10 according to the present invention, the effective value Irms of the ripple current is reduced to the ratio of transmission period (transmission period / one cycle of switching operation).

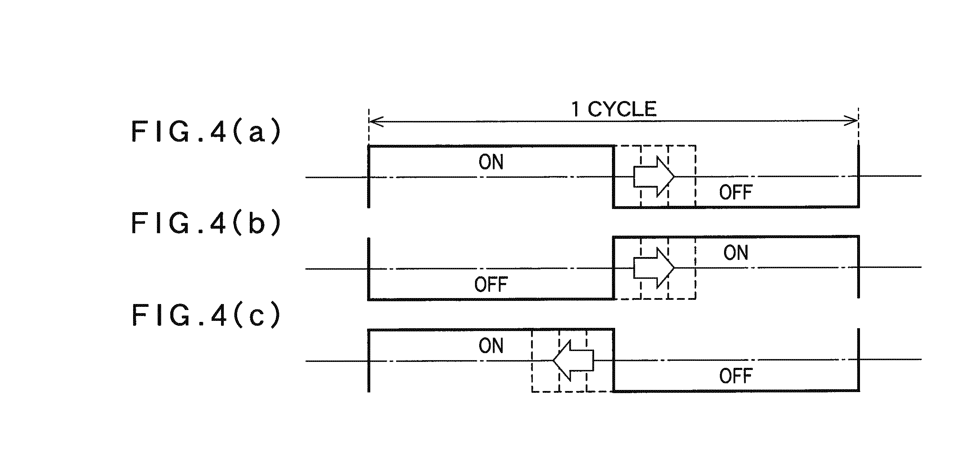

Figure 4 is a set of explanatory diagrams showing operational control of the full-bridge power converter according to the first embodiment. This drawing is a set of timing charts for a case in which the operation of the switching elements comprising in the full-bridge circuit 10 are controlled by control signals output from the switch control unit 20 of the first embodiment, and represents the control logic of the switching elements. Moreover, this diagram represents a period when a switching element is controlled to ON-state as high level and a period when it is controlled to OFF-state as low level.

Figure 4(a) indicates, for example, the switching operation of switching element (Q1) 11 of Figure 1. Figure 4(b) represents the operation of, for example, turning the switching element (Q3) 13 ON/OFF as indicated in Figure 2 in response to the operation of the switching element (Q1) 11 indicated in Figure 4(a). Figure 4(c) represents the operation of, for example, turning the switching element (Q3) 13 ON/OFF as indicated in Figure 3 in response to the operation of the switching element (Q1) 11 indicated in Figure 4(a).

In the case where, in order to regulate output current, for example, the switch control unit 20 increases the ON-duty of the switching element (Q1) 11 as indicated by broken lines in Figure 4(a), for example, the operational control in an ordinary full-bridge circuit would perform control to decrease the ON-duty of the switching element (Q3) 13 that is the symmetrical counterpart of the switching operation of the switching element (Q1) 11, and, as indicated by broken lines in Figure 4(b), would output to the switching element (Q3) 13 a control signal for delaying the timing of the transition from OFF-state to ON-state (the rising point).

As shown by broken lines in Figure 4(c), in the full-bridge power converter 1 of the first embodiment, when the ON-duty of the switching element (Q3) 13 is decreased in the foregoing manner, a control signal that advances the timing of the transition from ON-state to OFF-state (the falling point) is output to the switching element (Q3) 13.

As shown in Figures 4(a) and 4(b), in the ordinary switching operation performed heretofore, the switching operation is controlled so that that two switching elements deployed in parallel connection do not have overlapping ON-state periods or overlapping OFF-state periods.

To the contrary, in the full-bridge power converter 1, as shown in Figures 4(a) and 4(b), periods of overlapping ON-states occur between the switching element (Q1) 11 and switching element (Q3) 13 and between the switching element (Q2) 12 and switching element (Q4) 14, and, in addition, periods of overlapping OFF-states are produced to establish periods for passage of inertial current.

The switch control unit 20 selectively switches the supply of low potential side voltage and high potential side voltage to the two output points to establish transmission periods during which the voltage polarities of the two output points reverse, and by shorting between the output points, establishes rest periods of 0 [V], whereby controlling the voltage the three levels of +Vo, -Vo and 0 [V]. Vo is the voltage occurring between the output points.

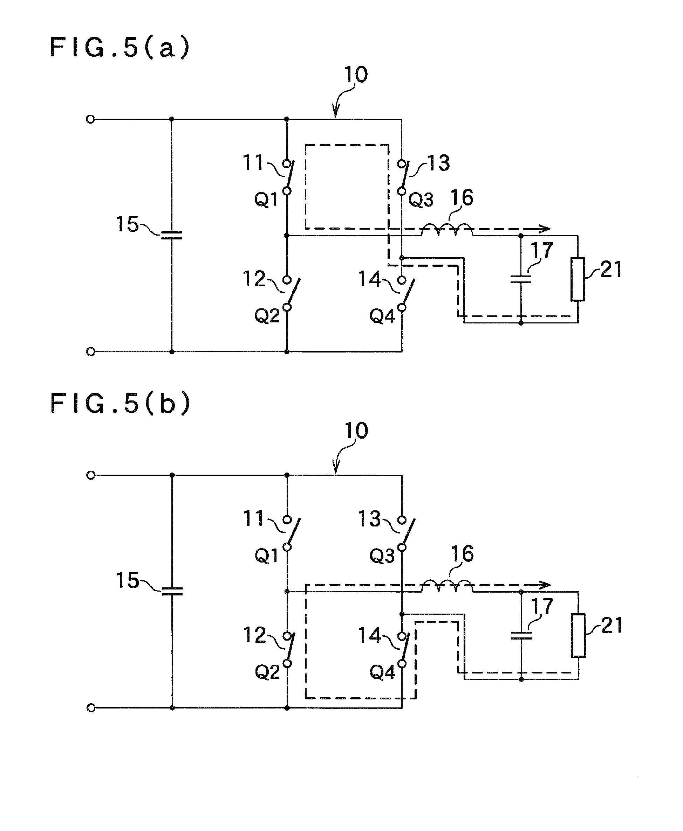

Figure 5 is a set of explanatory diagrams showing inertial current flowing in the full-bridge power converter according to the first embodiment. This drawing indicates, with broken lines, the inertial current that flows when the full-bridge power converter 1 operates.

Figure 5(a) shows the inertial current attributable to the inductor 16 that flows when the switching element (Q1) 11 and switching element (Q3) 13 are in ON-state and the switching element (Q2) 12 and switching element (Q4) 14 are in OFF-state. Further, Figure 5(b) shows the inertial current attributable to the inductor 16 that flows when the switching element (Q1) 11 and switching element (Q3) 13 are in OFF-state and the switching element (Q2) 12 and switching element (Q4) 14 are in ON-state.

When the switching elements are in the state shown in Figure 5(a), the output points of the full-bridge circuit 10 are connected by the switching element (Q1) 11 and switching element (Q3) 13. When the switching elements are in this condition, the power supplied to the input points is not transmitted to the output points and the energy (power) stored in the inductor 16 is discharged. This energy discharge produces inertial current to enable continuous flow of current from the full-bridge power converter 1 to the load 21.

The inertial current indicated by broken line arrows in the drawing arises in the inductor 16, flows to one end of the load 21, flows from the other end of the load 21 into the second output point of the full-bridge circuit 10, whose switching element (Q3) 13 and switching element (Q4) 14 are connected, and flows between the contacts of the switching element (Q3) 13 in ON-state. In addition, it flows between the contacts of the switching element (Q1) 11 in ON-state to reach the first output point to which the switching element (Q1) 11 and switching element (Q2) 12 are connected. Then it flows from the first output point to the inductor 16.

When the switching elements are switched ON/OFF in the state shown in Figure 5(b), the output points of the full-bridge circuit 10 are connected through the switching element (Q2) 12 and switching element (Q4) 14. Also when the switching elements are in this condition, the power supplied to the input points is not transmitted to the output points and, as explained above, inertial current occurring in the inductor 16 flows.

The inertial current indicated by broken-line arrow in the drawing flows from the inductor 16 into one end of the load 21, flows from the other end of the load 21 into the second output point to which the switching element (Q3) 13 and switching element (Q4) 14 are connected, flows between the contacts of the switching element (Q4) 14 in ON-state, and further flows between the contacts of the switching element (Q2) 12 in ON-state to reach the first output point to which the switching element (Q1) 11 and switching element (Q2) 12 are connected. Then it flows from the first output point to the inductor 16.

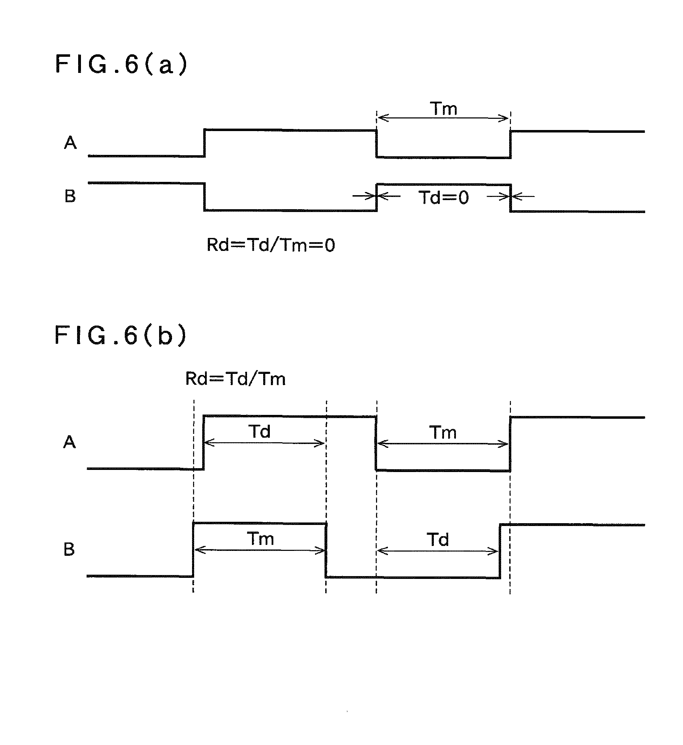

Figure 6 is a set of explanatory diagrams showing operation of the full-bridge power converter according to the first embodiment. The diagrams are timing charts representing the ON/OFF-states of the switching elements of the full-bridge circuit 10, and show a state transition A representing the operating pattern of one switching element and a state transition B representing the operating pattern of another switching element.

In the states shown in Figure 6, the high level portions represent ON-state and the low level portions represent OFF-states.

Moreover, the state transition A represents the ON/OFF operation of the switching element (Q1) 11, for example, and the state transition B represents the ON/OFF operation of the switching element (Q3) 13. The state transition A and state transition B represent ON/OFF-state reversing transitions of the switching element (Q1) 11 and switching element (Q3) 13.

Here, where the time duration in the state transition of whichever of the state transition A and state transition B is shorter ON-state period (narrower time width) is defined as Tm and an overlap period of ON-state of state transition A and ON-state of the state transition B is defined as Td, the ratio of the overlap period Td to the time duration Tm is defined as drive overlap ratio Rd (Rd = Td / Tm). In the example of Figure 6, the state transition A is the one whose given state (ON-state here) is of shorter time duration and the state transition B is the one whose given state (ON-state) is of longer time duration.

Figure 6(a) shows conventionally practiced, ordinary switching operation, and indicates a state transition A representing an operating pattern of the switching element (Q1) 11, for example, and a state transition B representing an operating pattern of the switching element (Q3) 13.

In the switching operation exemplified in Figure 6(a), when the respective switching elements transit from ON-state to OFF-state, or from OFF-state to ON-state, the delay time (the aforesaid dead time) that arises is of infinitesimal order and can be deemed [0]. Then, where the low-level period in the state transition A and the high-level period in the state transition B are defined as Tm, respectively, it follows from the assumption of period Td being [0] that the drive overlap ratio Rd becomes Td/Tm = 0, so that the period during which inertial current flows shown in Figure 5 does not occur.

Figure 6(b) shows an example of the switching operation of the full-bridge circuit 10 according to the first embodiment. Similarly to in Figure 6(a), the state transition A in Figure 6(b) represents the operating pattern of, for example, the switching element (Q1) 11, while the state transition B represents the operating pattern of the switching element (Q3) 13.

In Figure 6(b), the high-level side time duration of the state transition B is shorter than that of the state transition A. Moreover, the low-level side time duration of the state transition A is shorter than that of the state transition B. These shorter time durations are defined as Tm. Further, during the period when the state transition B is high level for the time duration Tm, that period when the state transition A is high level is defined as Td. Further, during the period when the state transition A is low level for the time duration Tm, that period when the state transition B is low level is defined as Td. Since the aforesaid inertial current flows during the period Td, the period during which the inertial current flows is longer in proportion as the drive overlap ratio Rd is greater.

Moreover, the period of current output using the input voltage (voltage V1) symmetrically becomes short. In other words, the period during which the state transition A is ON-state and the state transition B is OFF-state and the period during which the state transition A is OFF-state and the state transition B is ON-state become short.

Thus, the input voltage (voltage V1) is switched to shorten the period of current output and suppress the size of the ripple component, and during the period when current is not output, inertial current is passed to maintain the DC current flow into the load 21.

In a case where, for example, power of 10 [kW] or greater is output to the output load 21, the switch control unit 20 switches the switching elements of the full-bridge circuit 10 at 20 [kHz] or less, and when the load 21 is light, switches them at several hundred [kHz]. Further, depending on the size of the output power, the ON-duties of the switching elements are regulated as shown in Figure 4, and switching element control signals are generated and the full-bridge circuit 10 is operated so that the aforesaid drive overlap ratio Rd = (Td / Tm) x 100% becomes 50% or greater, for example,

Here, defining the output current of the full-bridge power converter 1 as "I", then, in operation that makes the drive overlap ratio Rd = 0%, as shown in Figure 6(a), the effective value Irms of the ripple current flowing into the input capacitor 15 becomes equal to the output current value I.

Further, defining the ON-duty during current output as "D", then, in operation that makes the drive overlap ratio Rd=100% (Td = Tm), the effective value Irms of the ripple current becomes proportional to I x (1-2D).

For example, in the case of operation in which a voltage V1 of 40 [V] is input to the full-bridge circuit 10 and a voltage of 4 [V] is produced across the terminals of the load 21, then, when the switch control unit 20 operates the switches to make the ON-duty 45%, if Rd is made 100% in this operation, the effective value of the ripple current becomes 1/10 relative to that in the case of Rd = 0%.

Regarding the input capacitor 15 (smoothing capacitor), even in the case where a ripple tolerance of 360 [A] would be necessary in the case of operating in the conventional manner at Rd = 0%, use of a capacitor having a ripple tolerance of around 36 [A] becomes possible by operation at Rd = 100%.

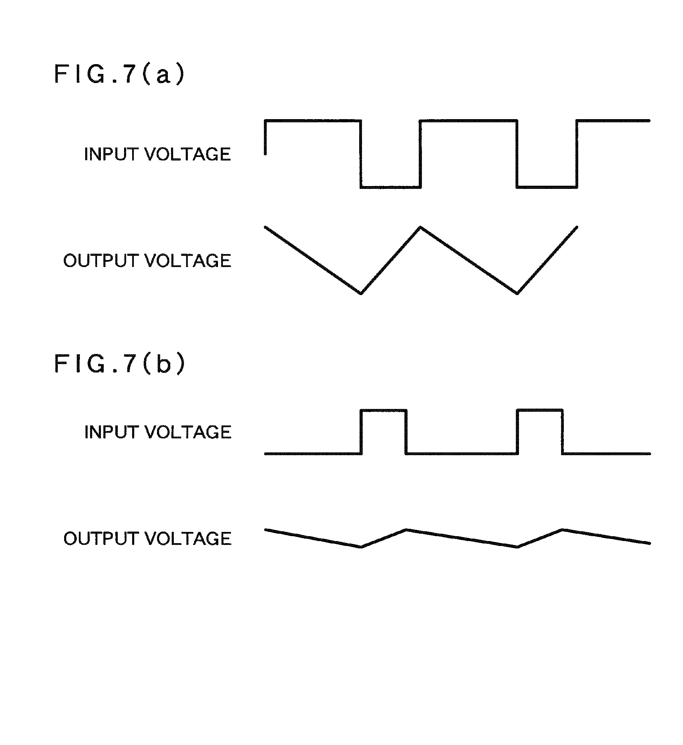

Figure 7 is a set of explanatory diagrams showing input voltages and output currents of a full-bridge circuit. These diagrams are time charts showing time-course change of input point voltage and output point current of the full-bridge circuit 10 or the like. Note that the input voltages in the diagrams are the voltages occurring between the two output points of the full-bridge circuit 10 and the output currents in the diagrams are the ripple components contained in the current output from the output points, namely, the AC component currents flowing into the output capacitor 17.

Figure 7(a) shows the input voltage and output current when the switching operation shown in Figure 2(a) is performed, and Figure 7(b) shows the input voltage and output current when the switching operation shown in Figure 3(b), for example, is performed.

When the switching operation shown in Figure 2(a) is performed, the high potential side and low potential side voltages applied to the two output points are reversed in accordance with the switching operation, and the voltage of an arbitrary output point of the full-bridge circuit 10 varies in the manner of the input voltage indicated in Figure 7(a). Thus, in the case of reversing the high and low potentials between the output points, the AC component current flows into a smoothing capacitor like the output capacitor 17 to give rise to a ripple current like the output current shown in Figure 7(a), for example.

When switching operation is performed as shown in Figure 3(b), for example, the voltage across the output points of the full-bridge circuit 10 varies in the manner of the input voltage indicated in Figure 7(b).

With the switching operation exemplified in Figure 3(b), the period during which current is output using the voltage V1 (the high-level period in the diagram) is shorter than the period during which the current is not output (the low-level period in the diagram). In other words, the period during which ripple current increases is kept short, so that, as seen in the output current shown in Figure 7(b), ripple current is produced that is of smaller peak value than that shown in Figure 7(a).

Moreover, also in the switching operation shown in Figure 3(c), similarly to in the switching operation shown in Figure 3(b), the period during which ripple current increases is kept short, so that, as seen in the output current shown in Figure 7(b), ripple current is produced that is of smaller peak value.

With the switching operation exemplified in Figure 3(b), there is no overlap period of ON-state of the switching element (Q3) 13 and ON-state of the switching element (Q2) 12 nor overlap period of OFF-state of the switching element (Q1) 11 and OFF-state of the switching element (Q4) 14, so that there is no reversing of high potential side voltage and low potential side voltage between the first and second output points. Specifically, when current is output using the voltage V1, high potential side voltage is applied to the first output point and low potential side voltage is applied to the second output point.

When the full-bridge circuit 10 operates in the foregoing manner and, for example, a battery cell or other secondary cell is connected as the load 21, it is possible to supply current from the full-bridge power converter 1 to the load 21 and perform charging. For example, in this case the high potential side electrode of the load 21 (secondary cell) is connected to the first output point of the full-bridge circuit 10 and the low potential side electrode of the load 21 is connected to the second output point. The voltage V1 is then input across the first and second input points of the full-bridge circuit 10 in the foregoing manner to output charge current from the full-bridge power converter 1.

Moreover, it is possible to use the full-bridge power converter 1 to measure the characteristics of a secondary cell (e.g., its charge / discharge characteristics), or to connect some other load or a power supply or the like for supplying power to another load between the first and second input points of the full-bridge circuit 10 and supply power to the other load. In other words, the full-bridge power converter 1 can also be used as a bidirectional converter.

In the case of feeding discharge current from the load 21 (secondary cell) to the full-bridge power converter 1, the high potential side electrode of the load 21 (secondary cell) is, for example, connected to the first output point of the full-bridge circuit 10 and the low potential side electrode of the load 21 (secondary cell) is connected to the second output point of the full-bridge circuit 10.

When the load 21 (secondary cell) and full-bridge circuit 10 are connected in this manner, switching operation is performed, as shown in Figure 3(b), for example, high potential side voltage is produced at the first input point of the full-bridge circuit 10 and low potential side voltage is produced at the second input point, whereby power discharged from the load 21 (secondary cell) is supplied to, for example, another load connected between the first input point and second input point.

The aforesaid power supply connected to the input side of the full-bridge circuit 10 can, for example, be a solar power generator or the like, and when the power supplied from the solar power generator to the other load is insufficient, power stored in the load 21 (secondary cell) can be supplementally supplied through the full-bridge power converter 1, and it is also possible, as appropriate, to operate the full-bridge power converter 1 to charge the load 21 (secondary cell).

Although the foregoing explanation of the operations assumes throughout that the output voltage is positive and the output current (charge current) is also positive, the full-bridge circuit 10 according to this first embodiment is, notwithstanding the difference of the drive logic of Figures 2 and 3, capable with respect to any of positive/negative output voltage and positive/negative output current (charge current and discharge current) operation, namely, is configured to enable "four quadrant" operation.

The output current Io of the full-bridge power converter 1 is expressed by Equation (1),

$$Io = 1/L \int \{Vb(t) - Eo\}\, dt + Ii \ldots (1),$$

(where Ii is constant of integration : initial value of output current, and L is inductance of the inductor 16), and is given by integrating the output instantaneous voltage Vb(t) of the full-bridge circuit 10.

Equation (1) above indicates that the value of the duty (e.g., ON-duty) ratio of the control signal that operates the full-bridge circuit 10 varies the output instantaneous voltage Vb(t) of the full-bridge circuit 10 in the derivative action. Further, the current output from the full-bridge power converter 1 can be controlled by this duty ratio value, and the range of control thereby extends to charge and discharge (positive and negative) currents.

The output voltage Eo of the full-bridge power converter 1 is expressed by Equation (2),

$$Eo = V1(2D - 1) \dots (2),$$

and the value D of the duty (ON-duty) ratio in the operation of the full-bridge circuit 10 is given by a linear equation. The range of the voltage controlled by the full-bridge power converter 1 extends to positive and negative, with voltage being positive when ON-duty is 50% or greater and negative when it is 50% or less.

Although detailed explanation was omitted, circuit operation is possible in the respective quadrants of output current and voltage polarity without relying on the difference of drive logic of Figures 2 and 3, but the three techniques shown in each of the aforesaid Figures 2 and 3 ((a), (b) and (c) in the diagrams) enable reduction of ripple current on the input side and output side irrespective of the quadrant.

Also in the case of performing the switching operation shown in Figure 3(c), there is no reversing of high potential side voltage and low potential side voltage between the first and second output points of the full-bridge circuit 10. With this switching operation, the high and low potentials occurring at the output points are reversed from those shown in Figure 3(b), and when the voltage V1 is input across the first input point and second input point of the full-bridge circuit 10 as mentioned earlier, low potential side voltage occurs at the first output point of the full-bridge circuit 10 and high potential side voltage occurs at the second output point thereof.

When, as mentioned earlier, a secondary cell is connected to the full-bridge power converter 1 as the load 21, the switching operation shown in Figure 3(c) can be performed to apply negative voltage to the load 21 (secondary cell) to measure its discharge characteristics, for example. Further, when activating the load 21 (secondary cell), the switching operation shown in Figure 3(c) is performed first to apply negative voltage, whereafter positive voltage is applied (the switching operation of Figure 3(b) is performed) to perform charging.

As set forth in the foregoing, according to the full-bridge power converter of the first embodiment, the periods of performing current output using the voltage V1 input to the full-bridge circuit 10 are shortened and inertial current is passed using energy stored in the inductor 16 during periods when current using the voltage V1 is not output, so that ripple current contained in the output current of the full-bridge circuit 10 can be held to be smaller to enable output of high-accuracy current.

Further, ripple current occurring on the input side of the full-bridge circuit 10 can be held lower, thereby enabling use of an input capacitor 15 of small ripple tolerance and, in addition, making it possible, inter alia, to lower the cost of peripheral circuitry, enhance efficiency by decreasing power loss, and reduce equipment size.

Second embodiment

In the full-bridge power converter 1 according to the first embodiment, the switching elements of the full-bridge circuit 10 are controlled using the timing of transition to ON-state and timing of transition to OFF-state as reference points for overlapping ON-states and OFF-states among the switching elements.

In controlling the switching operation of the switching elements, adoption of the center time point of the ON control period and the center time point of the OFF control period as reference points also makes it possible, as explained with regard to the first embodiment, to overlap ON-states and OFF-states among the switching elements and thereby lower the ripple current produced.

The full-bridge power converter according to the second embodiment is configured the same as that of the first embodiment. Explanation of features identical to those explained regarding the first embodiment will be not be repeated here, and the explanation will be made using the symbols assigned to the constituents in the first embodiment.

Moreover, the full-bridge power converter according the second embodiment operates generally in the same manner as that explained regarding the first embodiment.

Explanation of the operation similar to those explained regarding the first embodiment will not be repeated here, and explanation will be made with regard to the operation that characterize the full-bridge power converter of the second embodiment.

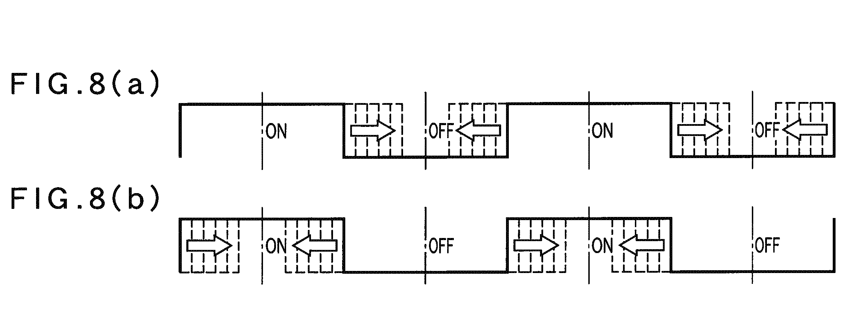

Figure 8 is a set of explanatory diagrams showing operational control of the full-bridge power converter according to the second embodiment. These diagrams are timing charts of the case where the operation of the switching elements comprising the full-bridge circuit 10 are controlled by control signals output from the switch control unit 20 of the second embodiment and show the control logic of the respective switches. Further, the diagrams represent a period when a switching element is controlled to ON-state as high level and a period when it is controlled to OFF-state as low level.

The switching operation shown in Figure 8(a) and the switching operation shown in Figure 8(b) are synchronized based on the center time point of ON-state period and the center time point of Off-state period.

For example, where Figure 8(a) is taken as the operation of the switching element (Q1) 11 and Figure 8(b) as the operation of the switching element (Q3) 13, no current using the voltage V1 is output from the output points of the full-bridge circuit 10 in the case where, as indicated by solid lines in the diagrams, the ON-duty of the switching elements is made 50% and the drive overlap ratio Rd is made 0%.

Using the center time points of ON-state and OFF-state periods as reference points, the switch control unit 20 of the second embodiment retards or advances the transition times as indicated by broken lines in the diagrams, so as to control the switching operation of the switching elements while establishing the "Transmission period" explained regarding the first embodiment and an inertial current passing period in "Rest period".

With the switching operation shown in Figure 8(a), OFF-state period is shortened and ON-state period is lengthened to make ON-duty greater than 50%.

Specifically, the center time points of ON-state period and OFF-state period are fixed and the timing of transitioning from ON-state to OFF-state is retarded. Further, the timing of transitioning from OFF to ON is advanced.

With the switching operation shown in Figure 8(b), ON-state period is shortened and OFF-state period is lengthened to make ON-duty less than 50% and OFF duty greater than 50%.

Specifically, the center time points of ON-state period and OFF-state period are fixed and the timing of transitioning from OFF-state to ON-state is retarded. Further, the timing of transitioning from ON-state to OFF-state is advanced.

When control signals having a desired drive overlap ratio are to be generated, one or both of the aforesaid timing of transition from ON-state to OFF-state and timing of transition from OFF to ON are regulated, and control signals are generated for realizing the desired drive overlap ratio Rd.

By inputting the control signals defined and generated in the foregoing manner to the respective switching elements, the full-bridge power converter 1 of the second embodiment operates as explained regarding the first embodiment using Figure 3 and other drawings. Further, similarly to the full-bridge power converter 1 of the first embodiment, current is output to the load 21 or current is supplied to another load or power supply connected to the first and second input points of the full-bridge circuit 10.

In the second embodiment, as set forth above, the switch control unit 20 generates control signals for realizing a desired drive overlap ratio Rd by using as reference points center time points of periods during which the switching elements maintain ON-states and OFF-states, thereby making it possible to reliably establish periods for passing inertial current at periods when no current is output using the voltage V1 input to the full-bridge circuit 10 and to lower ripple current generated.

Moreover, the effect of difference, variance and the like of switching speed among the switching elements are reduced to make it possible to implement switching operation having a desired drive overlap ratio Rd with high accuracy.

Reference sign list

1 FULL-BRIDGE POWER CONVERTER

10 FULL-BRIDGE CIRCUIT

11, 12, 13, 14 SWITCHING ELEMENT

15 INPUT CAPACITOR

16 INDUCTOR

17 OUTPUT CAPACITOR

20 SWITCH CONTROL UNIT

21 LOAD

**Claims**

1. A full-bridge power converter comprising:

a full-bridge circuit constituted by series-connecting one end of a first switching element and one end of a second switching element, series-connecting one end of a third switching element and one end of a fourth switching element, and parallel-connecting the series-connected first and second switching elements and the series-connected third and fourth switching elements; a switch control unit for individually controlling ON/OFF operation of the first switching element to the fourth switching element; an input capacitor connected between a first connection point connecting between another end of the first switching element and another end of the third switching element and a second connection point connecting between another end of the second switching element and another end of the fourth switching element; a first inductor connected at one end to a third connection point connecting between the one end of the first switching element and the one end of the second switching element; and an output capacitor connected at one end to another end of the first inductor and connected at another end to a fourth connection point connecting between the one end of the third switching element and the one end of the fourth switching element, and wherein,

when a DC voltage is input between the first connection point and second connection point and a load is connected to opposite ends of the output capacitor,

the switch control unit generates control signals for the individual switching elements for controlling ON/OFF operation of the switching elements,

turns the first switching element and second switching element ON and OFF alternately and turns the third switching element and fourth switching element ON and OFF alternately to output from the full-bridge circuit supply current for supplying to the load,

turns ON both the first switching element and the third switching element during a period when the supply current is not output to connect and pass inertial current between the third connection point and fourth connection point, and

where whichever of ON-state time durations of the first switching element and the third switching element is shorter is defined as time duration Tm, an overlap period wherein an ON/OFF-state of a switching element whose ON-state time duration is longer and an ON/OFF-state of a switching element whose ON-state time duration is shorter are the same is defined as Td, and a drive overlap ratio indicating a ratio of the overlap period Td to the time duration Tm is defined as Rd = (Td / Tm) x 100%,

controls operation of the switching elements to make the drive overlap ratio Rd not less than 50% and not greater than 100%.

2. The full-bridge power converter set out in claim 1, wherein the switch control unit defines switching operation transition timing with reference to center time points of ON-state periods and center time points of OFF-state periods of the switching elements.

3. The full-bridge power converter set out in claim 1 or 2, further comprising a second inductor series-connected between the fourth connection point and the other end of the output capacitor.

# FIG.1

FIG.2(a)

FIG.2(b)

FIG.2(c)

# FIG.3(a)

# FIG.3(b)

# FIG.3(c)

F I G . 4 ( a )

1 CYCLE

ON

OFF

F I G . 4 ( b )

OFF

ON

F I G . 4 ( c )

ON

OFF

EP 2 854 273 A1

FIG.5(a)

FIG.5(b)

FIG.6(a)

A

Tm

B

Td=0

Rd=Td/Tm=0

FIG.6(b)

Rd=Td/Tm

A

Td

Tm

B

Tm

Td

FIG.7(a)

INPUT VOLTAGE

OUTPUT VOLTAGE

FIG.7(b)

INPUT VOLTAGE

OUTPUT VOLTAGE

FIG.8(a)

FIG.8(b)

## INTERNATIONAL SEARCH REPORT

| International application No. |
| --- |
| PCT/JP2013/061692 |

A.   CLASSIFICATION OF SUBJECT MATTER
*H02M3/155*(2006.01)i, *H02M3/158*(2006.01)i, *H02M7/5387*(2007.01)n

According to International Patent Classification (IPC) or to both national classification and IPC

B.   FIELDS SEARCHED

Minimum documentation searched (classification system followed by classification symbols)
H02M1/00-11/00

Documentation searched other than minimum documentation to the extent that such documents are included in the fields searched
Jitsuyo Shinan Koho        1922-1996    Jitsuyo Shinan Toroku Koho     1996-2013
Kokai Jitsuyo Shinan Koho   1971-2013    Toroku Jitsuyo Shinan Koho     1994-2013

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | JP 2012-010514 A   (Nichicon Corp.), 12 January 2012 (12.01.2012), fig. 1 to 3 (Family: none) | 1-3 |
| A | JP 2000-312474 A   (Matsushita Electric Industrial Co., Ltd.), 07 November 2000 (07.11.2000), fig. 1 to 2 (Family: none) | 1-3 |
| A | WO 2005/086336 A1   (Rohm Co., Ltd.), 15 September 2005 (15.09.2005), fig. 1, 5 & JP 4675319 B2        & US 2007/0171684 A1 & CN 1906842 A           & KR 10-2006-0121224 A & TW I342659 B | 1-3 |

☒   Further documents are listed in the continuation of Box C.          ☐   See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 23 May, 2013 (23.05.13) | 04 June, 2013 (04.06.13) |

| Name and mailing address of the ISA/ Japanese Patent Office | Authorized officer |
| --- | --- |
| Facsimile No. | Telephone No. |

Form PCT/ISA/210 (second sheet) (July 2009)

**EP 2 854 273 A1**

**INTERNATIONAL SEARCH REPORT**

| | International application No. |
|---|---|
| | PCT/JP2013/061692 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-134943 A  (Haiden Laboratory Inc.), 12 May 2000 (12.05.2000), fig. 1 to 3 & US 6130831 A | 1-3 |
| A | JP 2664163 B2  (Semiconductor Research Foundation), 15 October 1997 (15.10.1997), fig. 1, 3 & JP 01-97173 A          & US 5021936 A & EP 0284021 A2          & DE 3852330 T2 & CN 88101565 A          & KR 1991-0000543 B1 | 1-3 |

Form PCT/ISA/210 (continuation of second sheet) (July 2009)

22

**EP 2 854 273 A1**

**Patent documents cited in the description**

- JP 2664163 B